# FASCICULE DE BREVET EUROPEEN

(11) **EP 2 919 980 B1**
(45) Date de publication et mention de la délivrance du brevet: **18.10.2017**
(21) Numéro de dépôt: 13789338.4
(22) Date de dépôt: 12.11.2013
(51) Int. Cl.: B29D 30/14, B29D 30/28, B29D 30/16, B29D 30/30

(54) **DISPOSITIF ET MÉTHODE D'ASSEMBLAGE DE LA CEINTURE SOMMET D'UN PNEUMATIQUE**
VORRICHTUNG UND VERFAHREN ZUR MONTAGE DER GÜRTELLAGE EINES REIFENS
DEVICE AND METHOD FOR ASSEMBLING THE BRACING PLY OF A TYRE

(30) Priorité: 19.11.2012 FR 1260953
(43) Date de publication de la demande: 23.09.2015
(73) Titulaire: Compagnie Générale des Etablissements Michelin, 63000 Clermont-Ferrand (FR)
(72) Inventeur: DAILLEZ, Olivier, F-63040 Clermont-Ferrand Cedex 9 (FR); RAVAT, Stéphane, F-63040 Clermont-Ferrand Cedex 9 (FR)
(74) Mandataire: Noel, Luminita
(86) Numéro de dépôt international: PCT/EP2013/073631
(87) Numéro de publication internationale: WO 2014/076086

(56) Documents cités:
- EP-A1- 2 199 071
- EP-A1- 2 272 656
- EP-A2- 0 962 304
- WO-A2-2010/065042
- DE-A1- 19 942 220
- FR-A- 1 362 190
- FR-A1- 2 342 842
- JP-A- 2001 277 377
- US-B1- 6 676 789

## Description

L'invention concerne le domaine de la fabrication des pneumatiques et s'intéresse plus particulièrement à l'étape d'assemblage de la ceinture sommet sur une carcasse du pneumatique.

Cette étape d'assemblage est précédée, en règle générale, par une étape de conformation qui consiste à faire passer l'ébauche de pneumatique dont la forme est sensiblement cylindrique vers une forme généralement toroïdale.

La méthode la plus traditionnelle, consiste à placer la carcasse sur un dispositif comprenant deux jantes aptes à recevoir les bourrelets de l'ébauche, et entre lesquelles est montée une membrane de conformation souple. Une alternative consiste à utiliser des jantes formant une liaison étanche avec les bourrelets de l'ébauche. On conforme l'ébauche de pneumatique en gonflant l'espace intérieur de la membrane ou de l'ébauche, et en rapprochant axialement les deux jantes maintenant les bourrelets (voir JP 2001 277377 et DE 199 42 220 A1).

La présente description s'adresse particulièrement à ce type de dispositif et de procédé de conformation.

L'ébauche conformée est le résultat de cette opération de conformation.

On observe alors que, quel que soit le dispositif utilisé d'un type décrit ci-dessus, la forme du tore obtenu dépend de la courbe d'équilibre naturelle résultant de la mise en tension, sous l'effet de la pression régnant dans la membrane ou dans l'espace intérieur de l'ébauche conformée, des nappes de renfort carcasse ancrées par leurs extrémités axiales sur chacun des bourrelets. Il en résulte que la forme naturelle de la surface externe de l'ébauche conformée destinée à recevoir la ceinture sommet est en règle générale très galbée.

La construction du sommet de l'ébauche de pneumatique peut se poursuivre en déposant successivement les nappes de renforts de sommet, la nappe de frettage et la bande de roulement directement sur l'ébauche conformée obtenue après gonflage de la membrane.

Toutefois, ce mode opératoire ne permet pas de réaliser des pneumatiques pour lesquels la forme du sommet diffère de la forme naturelle de la membrane de conformation une fois gonflée. Ce qui est le cas pour la plupart des pneumatiques modernes dans lesquels les hauteurs de flanc sont réduites par rapport à la largeur du sommet et dont le galbe du sommet passe radialement très à l'intérieur de la courbe d'équilibre naturelle.

Une première alternative connue consiste alors à brider, l'extension de la partie centrale de la membrane de conformation à l'aide de nappes intégrées dans son sommet, de manière à obtenir le profil désiré. Mais cette méthode se heurte à l'absence de maitrise du diamètre de gonflage et donc du diamètre de pose des composants formant la ceinture sommet. Des moyens de conformation faisant appel à des supports rigides sont également utilisés, mais ne permettent pas des taux de conformation très importants en raison des rayons de courbures imposés par les éléments de support rigides.

Aussi, la méthode alternative consistant à réaliser la ceinture de renfort de sommet sur un moyen séparé s'est largement développée dans l'industrie. La construction du sommet s'opère par enroulement des composants précités sur une forme sensiblement cylindrique dont le galbe est adapté à la forme du sommet de l'enveloppe. Puis, à l'aide par exemple d'une virole à vide, on vient saisir la ceinture de sommet par sa circonférence extérieure, on introduit la carcasse dans l'anneau ainsi formé, et on gonfle la membrane de conformation de sorte que, en augmentant son diamètre, la carcasse vient en contact étroit avec la circonférence intérieure de la ceinture de sommet. L'ébauche, coiffée de son sommet, est alors acheminée vers l'atelier de vulcanisation.

Ce procédé, qui offre de larges possibilités de réalisation aux concepteurs des pneumatiques, souffre toutefois de la nécessité de prévoir des lignes de fabrication souvent indépendantes pour la réalisation du sommet et pour l'assemblage du sommet sur la carcasse conformée, et reste incompatible avec une fabrication entièrement en ligne comme cela était encore possible avec le procédé originel.

L'invention a pour objet de proposer un dispositif et un procédé alternatif permettant d'assembler la ceinture de sommet sur la carcasse conformée, tout en assurant un profil de pose des composants formant ladite ceinture qui soit conforme aux exigences des pneumatiques modernes.

Le dispositif d'assemblage destiné à la fabrication d'une ébauche de pneumatique, selon l'invention, comprend des moyens de maintien, aptes à contenir une carcasse de pneumatique conformée par la paroi radialement externe de son sommet selon une circonférence donnée et mise en rotation autour de son axe. Ce dispositif se caractérise en ce que lesdits moyens de maintien comprennent une fenêtre d'introduction permettant de faire passer des composants linéaires entre la surface radialement externe dudit sommet et la partie radialement interne desdits moyens de maintien.

L'ébauche conformée est alors contenue à une circonférence donnée, parfaitement maitrisable, et inférieure à la circonférence obtenue lorsque la carcasse conformée épouse son profil naturel après conformation.

La pose des composants formant la ceinture de sommet s'opère tout simplement en faisant pénétrer lesdits composants dans la fenêtre d'introduction et en faisant tourner l'ébauche autour de son axe de rotation.

Avantageusement, le dispositif d'assemblage peut également comprendre :
- un bâti supportant un tambour d'assemblage comprenant des jantes coaxiales avec l'axe de rotation de l'ébauche et adaptées pour recevoir les bourrelets de l'ébauche de pneumatique,
- des moyens de conformation de l'ébauche de pneumatique,
- des moyens de mise en rotation du tambour d'assemblage autour de son axe'.

Selon une première variante d'exécution, les moyens de maintien sont formés par une pluralité de rouleaux dont l'axe de rotation est orienté dans la direction de l'axe du tambour, lesdits rouleaux étant mobiles radialement et arrangés de manière à former un espace intérieur circulaire de circonférence donnée.

Avantageusement, lesdits rouleaux sont montés à rotation par une seule de leur extrémité axiale sur une platine, de manière à permettre l'introduction et l'extraction de l'ébauche de pneumatique.

Avantageusement, les rouleaux ont un profil méridien concave adapté au profil du sommet de l'ébauche de pneumatique à réaliser.

Avantageusement la fenêtre d'introduction est définie par l'espace entre deux rouleaux.

Avantageusement, au moins un des rouleaux est un rouleau motorisé. De préférence on choisira de motoriser un des deux rouleaux définissant la fenêtre d'introduction, voire les deux, voire encore l'ensemble des rouleaux de manière à faciliter l'entrainement de l'ébauche en rotation.

Avantageusement l'un des deux rouleaux définissant la fenêtre d'introduction est un rouleau maître.

Selon une seconde variante d'exécution de l'invention, les moyens de maintien sont formés par une bande, maintenue par deux rouleaux orientés dans la direction de l'axe de rotation de l'ébauche', et entre lesquels ladite bande est apte à circuler autour de la circonférence du sommet de l'ébauche conformée de pneumatique mise en rotation autour dudit axe.

Avantageusement, l'espacement entre les deux rouleaux définit la fenêtre d'introduction.

Avantageusement, la position des deux rouleaux définissant la fenêtre d'introduction sur la platine est ajustable dans deux directions perpendiculaires à l'axe de de rotation l'ébauche', et de préférence perpendiculaires entre elles, de manière à permettre d'une part l'introduction et l'extraction de l'ébauche de pneumatique et d'autre part l'ajustement du diamètre par rapport à l'axe de rotation de l'ébauche de la partie de la bande entourant l'ébauche de pneumatique

Avantageusement, lesdits deux rouleaux définissant la fenêtre d'introduction sont montés à rotation par une seule de leur extrémité axiale sur une platine.

Avantageusement, au moins un des deux rouleaux définissant la fenêtre d'introduction est motorisé de manière à faciliter l'entrainement des composants dans la fenêtre d'introduction.

Avantageusement, la bande est embarrée autour de rouleaux disposés à l'extérieur de l'espace occupé par la bande lorsque ladite bande est en contact avec la surface externe de l'ébauche de pneumatique, de manière à former une boucle fermée.

Avantageusement le dispositif d'assemblage à bande comprend un moyen apte à modifier la longueur et la tension de la partie de la bande destinée à contenir l'ébauche de pneumatique par son sommet et circulant entre les deux rouleaux définissant la fenêtre d'introduction.

L'invention concerne aussi un procédé d'assemblage d'une ébauche de pneumatique comprenant les étapes au cours desquelles :
- on réalise l'ébauche d'une carcasse de pneumatique,
- à l'aide d'un dispositif selon l'invention ci-dessus, dont on a préalablement ajusté la circonférence radialement interne à une valeur initiale prédéterminée, on conforme ladite carcasse pour lui conférer une forme sensiblement toroïdale, de sorte qu'une surface radialement extérieure de l'ébauche conformée destinée à recevoir la ceinture sommet est contenue à une circonférence initiale donnée par lesdits moyens de maintien,
- on met en rotation l'ébauche autour de son axe', et on dépose sur la surface radialement externe de l'ébauche les composants formant la ceinture de sommet du pneumatique en les faisant passer par ladite fenêtre d'introduction.

Avantageusement, ce procédé peut prévoir de modifier la circonférence radialement interne des moyens de maintien après la pose de chacun des composants, de manière à maintenir la surface radialement extérieure de l'ébauche de pneumatique à la circonférence initiale.

La description qui suit, permet de mieux comprendre le fonctionnement d'un dispositif selon l'invention selon ses deux alternatives préférées de réalisation, et s'appuie sur les figures 1 à 9 dans lesquelles :
- la figure 1 représente un dispositif selon l'invention selon la première variante d'exécution,
- la figure 2 représente ce même dispositif dans lequel a été insérée une ébauche de pneumatique,
- la figure 3 et les médaillons 3a et 3b représentent une vue de profil du dispositif selon ce premier mode de réalisation,
- la figure 4 représente un dispositif selon l'invention selon la seconde variante d'exécution,
- la figure 5 représente ce même dispositif dans lequel a été insérée une ébauche de pneumatique,
- la figure 6 et le médaillon 6a représentent une vue de profil du dispositif selon ce premier mode de réalisation,
- les figures 7 et 8 illustrent des dispositifs selon chacun des modes préférés de réalisation de l'invention, lors de la pose d'une nappe de renfort sommet,
- la figure 9 illustre un dispositif selon le second mode de réalisation, lors de la pose d'un composant continu.

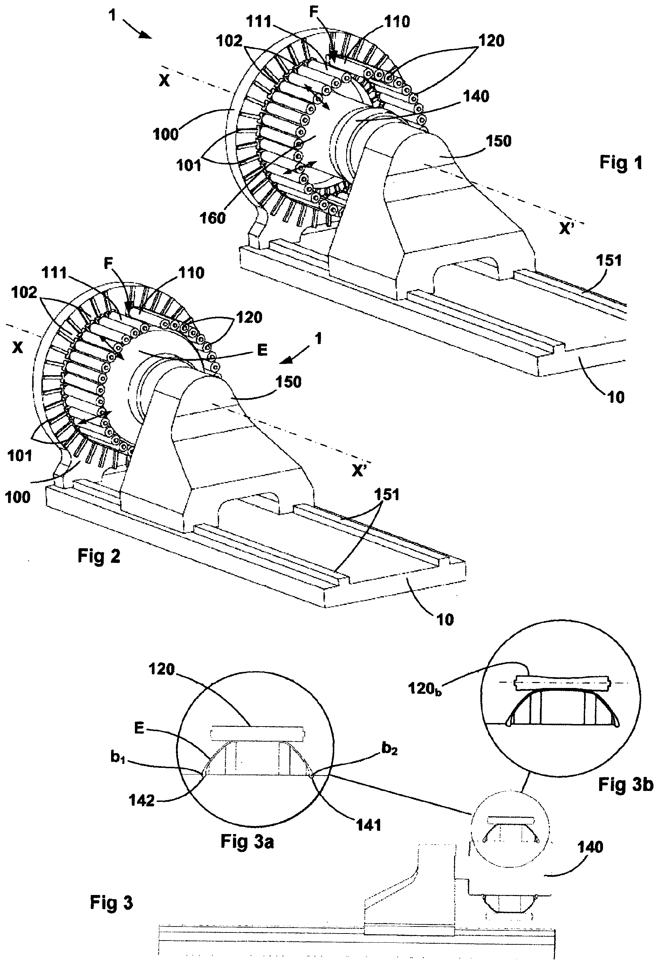

La figure 1 représente un dispositif 1 selon une première forme de réalisation de l'invention. Ce dispositif comprend une platine 100 montée sur des rails 151 fixés sur un bâti 10, et sur laquelle sont montés une pluralité de rouleaux 110, 111, 120. Les rouleaux 110, 111, 120 sont disposés selon un cylindre d'axe XX'. L'axe de référence XX' est parallèle aux rails 151. Les axes de rotation des rouleaux sont également parallèles à l'axe XX'.

Chacun des rouleaux est fixé à rotation par une de ses extrémités axiale sur un support 102 coulissant sur un rail 101 orienté radialement par rapport à l'axe XX'. Un mécanisme (non représenté) permet de rapprocher ou d'éloigner simultanément l'ensemble des rouleaux de l'axe XX'.

L'ensemble des génératrices radialement internes de chacun des rouleaux définit un espace intérieur qui limite l'extension du sommet de l'ébauche de pneumatique lors de la conformation. L'axe de référence XX' est donc également l'axe de rotation de l'ébauche.

L'espace situé entre les deux rouleaux 110 et 111 forme une fenêtre d'introduction F constituant le passage au travers duquel sont introduits les composants destinés à former la ceinture de renfort de sommet. Ces composants peuvent être formés par des profilés, des bandes de caoutchouc, ou par des éléments de renfort, par exemple des fils de renfort textiles ou métalliques, enrobés dans un mélange de caoutchouc et faisant un angle donné avec la direction longitudinale du composant à enrouler.

Les rouleaux peuvent être libres en rotation mais également comporter des moyens de motorisation permettant d'améliorer l'entrainement de l'ébauche de pneumatique lors de l'introduction des composants linéaires. Aussi, de préférence on choisira de motoriser les rouleaux définissant la fenêtre d'introduction pour assurer un bon entrainement des composants dans la fenêtre d'introduction.

Un châssis 150 est monté sur les rails 151, de sorte que ledit châssis 150 est mobile en translation selon la direction XX' relativement à la platine 100 supportant les rouleaux. Le châssis 150 supporte un tambour 140 entrainé en rotation autour de l'axe de référence XX' par un moteur (non représenté). Le tambour 140 comprend deux jantes 141 et 142 (voir médaillon 3a de la figure 3) mobiles en translation l'une par rapport à l'autre selon la direction XX', et destinées à recevoir les bourrelets b₁ et b₂ de l'ébauche E de pneumatique, comme cela est représenté sur les figures 2 et 3.

On observera ici que lorsque l'ensemble des rouleaux est motorisé il est possible de laisser le tambour 140 libre à rotation autour de son axe. Toutefois, il s'est avéré plus performant d'avoir une motorisation simultanée des rouleaux et du tambour 140, sous réserve d'assurer un ajustement précis des vitesses circonférentielles de ces différents moyens.

Les jantes peuvent être du type formant une liaison étanche avec les bourrelets b₁ et b₂ ou du type standard non étanche. Dans ce dernier cas, il sera nécessaire de prévoir une membrane de conformation 160 (référence visible sur la figure 1) formant une liaison étanche avec les jantes comme cela a été exposé dans les paragraphes précédents.

Des moyens permettent d'introduire de l'air sous pression dans l'espace intérieur formé par l'ébauche de pneumatique ou par la membrane de conformation.

La figure 3 représente le dispositif selon cette première forme de réalisation lorsque l'ébauche de pneumatique vient d'être conformée. Les rouleaux 120 appuient sur le sommet de l'ébauche et l'empêchent d'adopter le profil naturel que l'ébauche aurait en l'absence de ces rouleaux. La surface du sommet est donc contenue dans l'espace intérieur formé par les génératrices radialement internes de la pluralité de rouleaux sur lesquels elle vient en appui sous l'effet de la pression d'air interne.

On observera ici que, plus le nombre de rouleaux 120 est important, et sous réserve que ces derniers soient répartis le plus régulièrement possible autour de la circonférence de l'ébauche, plus les points de contact entre les rouleaux et le sommet de l'ébauche conformée sont rapprochés et répartis tout au long de la circonférence. Il en résulte une meilleure maitrise de la circonférence de pose des produits formant la ceinture de renfort. De plus, la proximité entre deux rouleaux successifs permet aussi de contenir l'expansion naturelle de l'ébauche conformée et donc de la surface de pose vers la forme bombée qu'elle aurait sans la présence desdits rouleaux.

Le mode opératoire de mise en oeuvre d'un dispositif du type décrit ci-dessus prévoit de réaliser une carcasse de pneumatique de forme généralement cylindrique et comprenant des anneaux de renfort de bourrelets autours desquels sont ancrés les deux extrémités axiales de la nappe de renfort de carcasse, une nappe d'étanchéité située radialement sous la nappe de renfort de carcasse, ainsi que des profilés destinés à protéger la carcasse tels que des gommes de protection de bourrelet ou des gommes de protection des flancs.

La carcasse peut être réalisée sur des moyens d'assemblage distincts ou directement sur le tambour 140.

La carcasse, maintenue par les jantes 141 et 142 est alors approchée axialement selon l'axe XX' des moyens de maintien formés par la pluralité de rouleaux, que l'on aura préalablement disposés dans leur position initiale sur une circonférence de rayon donné.

La conformation de la carcasse est alors initiée en mettant sous pression l'espace intérieur compris entre les jantes et la carcasse et en rapprochant axialement les deux jantes l'une de l'autre jusqu'à ce que la carcasse conformée vienne en appui contre les génératrices radialement internes des rouleaux 120.

Une pression de conformation comprise entre 0,3 bars et 0,8 bars semble donner entière satisfaction.

Le profil de la surface du sommet de la carcasse conformée est donné par le profil transversal de la pluralité de rouleaux. Il est ainsi possible d'utiliser des rouleaux de forme cylindriques avec des génératrices rectilignes permettant d'obtenir un sommet de l'ébauche de forme plate comme cela est illustré au médaillon 3a de la figure 3. Il est également possible de conférer une forme concave auxdites génératrices de chacune des rouleaux afin d'obtenir un sommet d'ébauche de forme légèrement bombée comme l'illustre le rouleau 120_{b}, dans le médaillon 3b de la figure 3.

La circonférence de la surface de pose après conformation de l'ébauche nue, c'est-à-dire avant la pose des composants formant la ceinture de sommet, est considérée comme la circonférence de base dont le diamètre correspond sensiblement au diamètre intérieur de la circonférence d'axe XX' inscrite pas les génératrices radialement internes des rouleaux 120 dans leur position initiale. La surface de l'ébauche à ce stade de l'assemblage est considérée comme la surface de base.

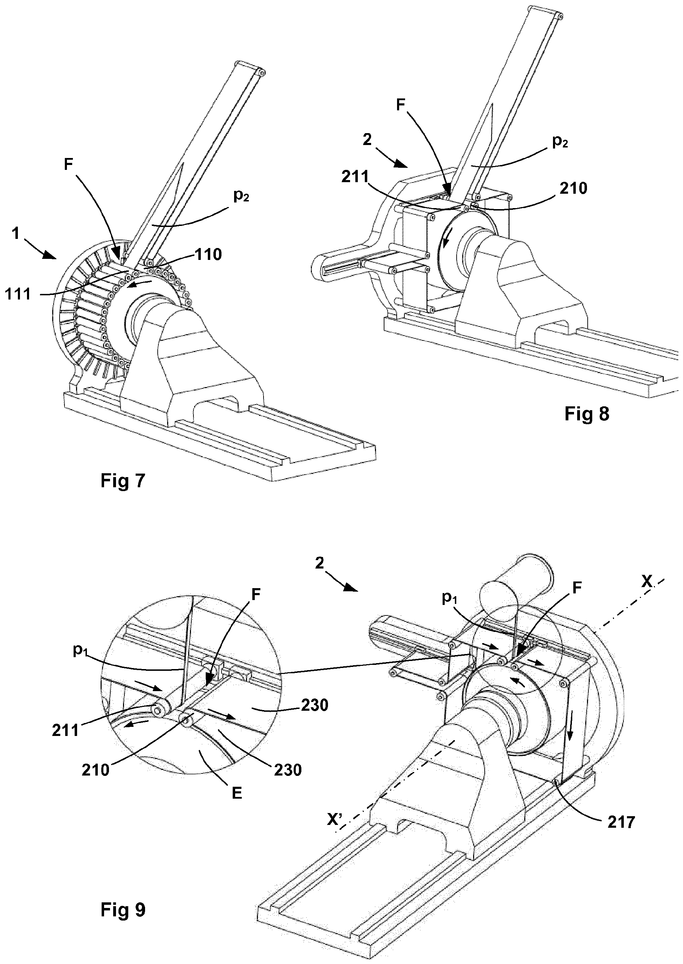

La pose des composants formant la ceinture de sommet peut alors s'effectuer en introduisant les composants comme le produit P₂ par la fenêtre F formée par l'espace entre les rouleaux 110 et 111, et en mettant en rotation autour de son axe XX' l'ébauche conformée supportée par les jantes 141 et 142, comme cela est illustré à la figure 7.

L'ébauche conformée roule alors à l'intérieur des rouleaux 120, et le sommet de l'ébauche conserve le profil imposé par les rouleaux.

On observera ici que, dans le cas où aucune modification ne serait opérée sur la position radiale des rouleaux, l'introduction de composant d'une certaine épaisseur, vient modifier la surface en contact avec les rouleaux et donc modifie la position de la surface de base, en réduisant sa circonférence.

Aussi, le procédé selon l'invention prévoit de modifier la position radiale des rouleaux pour augmenter à volonté la circonférence inscrite par les rouleaux aux points de contact avec l'ébauche, de manière à maintenir la circonférence de base de la surface de base à une valeur constante. Ainsi, à chaque composant posé, et en particulier lorsqu'il s'agit de composants de forte épaisseur on déplace radialement vers l'extérieur les rouleaux 110, 111 et 120. Pour une plus grande précision, on peut aussi déplacer les rouleaux au fur et à mesure de l'enroulement de composants de forte épaisseur, comme la bande de roulement, pour éviter la mise en compression ou la déformation radiale de la surface de base.

Lorsque l'ensemble des composants est déposé sur le sommet de l'ébauche, les rouleaux 110, 111 et 120 sont alors écartés de manière à libérer l'ébauche et à autoriser son expédition vers l'étape suivante de fabrication.

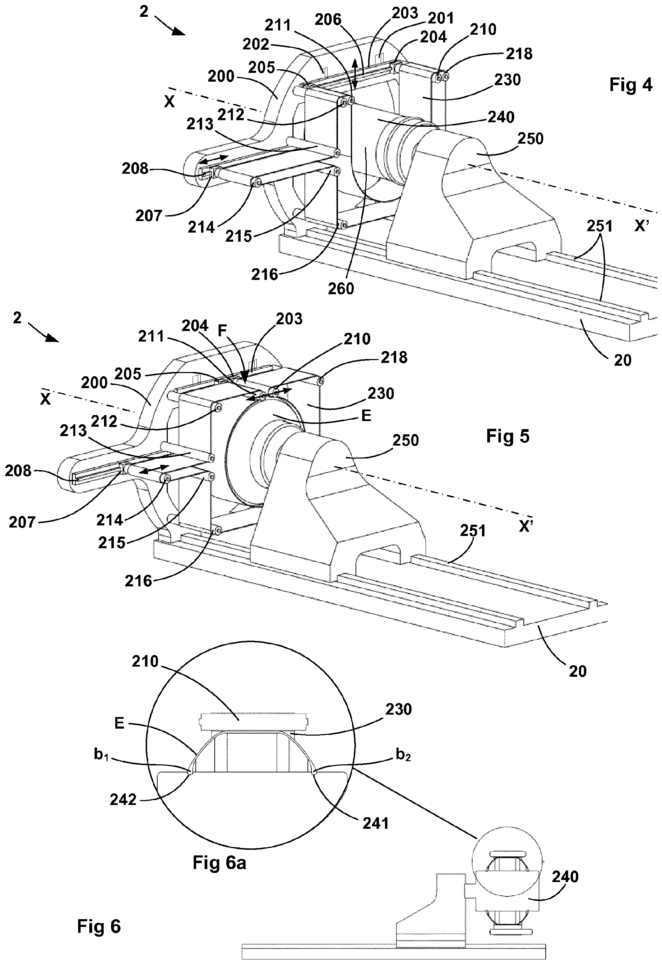

Le dispositif 2 représenté dans les figures 4, 5 et 6 représente une forme alternative de mise en oeuvre de l'invention, dans laquelle les moyens de maintien sont constitués par une bande souple et continue 230, formant une boucle fermée, et circulant entre un ensemble de rouleaux 210, 211, 212, 213, 214, 215, 216, 217 (visible uniquement sur la figure 9) et 218. Les axes de rotation des rouleaux sont parallèles entre eux et à l'axe XX'.

Les rouleaux 210 et 211 sont montés à rotation par une de leur extrémité axiale sur des supports 204 et 205 circulant sur un rail 206 fixé sur un cadre 203. Le cadre 203 est monté sur une platine 200 par l'intermédiaire d'éléments motorisés (non visibles) se déplaçant dans des lumières 201 et 202 disposées sur la platine 200 et orientées dans une direction perpendiculaire à la direction du rail 206. L'un des deux rouleaux au moins est motorisé, de préférence les deux sont motorisés L'un étant un rouleau «maître » et l'autre un rouleau « esclave ». De manière conventionnelle dans le domaine des automatismes, lorsque l'on parle d'un actionneur « maître », on fait référence à la régulation du procédé d'assemblage, c'est-à-dire de l'ensemble des actionneurs. Si le rouleau est maître, cela signifie que sa position angulaire sert de référence pour le contrôle du procédé en ce qui concerne d'autres actionneurs que l'on qualifie d'« esclaves ».

De manière équivalente au dispositif 1, les rouleaux 210, 211 du dispositif 2, s'ils sont motorisés, facilitent l'entrainement des composants dans la fenêtre d'introduction.

Le plan de la platine 200 est perpendiculaire à l'axe XX'.

Il est ainsi possible de déplacer les rouleaux 210 et 211 le long du rail selon une première direction, et de déplacer le rail selon une deuxième direction, perpendiculaire à la première direction, chacune de ces directions étant perpendiculaire à l'axe XX'.

La partie de la bande formant une boucle, et comprise entre les rouleaux 210 et 211, est destinée à contenir l'ébauche conformée E par la surface radialement externe de son sommet, comme cela est représenté à la figure 2.

Les rouleaux 212, 213, 216, 217 et 218, permettent de faire circuler la bande en circuit fermé autour de l'espace destiné à recevoir l'ébauche conformée. Ces rouleaux sont montés à rotation par une de leur extrémité axiale directement sur la platine 200.

Un rouleau 214 monté à rotation par une de ses extrémités axiale sur un support 207 circule sur un rail 208 fixé sur la platine 200. De la sorte que, en modifiant la position du support 207, on modifie la longueur de la boucle formée par la bande entre les rouleaux 210 et 211. Et lorsque l'ébauche conformée E est en position, on peut également ajuster la tension de serrage de la bande autour de la surface du sommet de ladite ébauche.

L'espacement compris entre les rouleaux 210 et 211 définit la fenêtre d'introduction F.

Comme dans le dispositif selon la première forme de réalisation la platine 200 est montée sur des rails 251, parallèles à l'axe XX' et fixés sur un bâti 20.

Un châssis 250 est monté sur les rails 251, de sorte que ledit châssis 250 est mobile en translation selon la direction de l'axe XX' relativement à la platine 200 supportant les rouleaux et la bande de maintien 230. Le châssis 250 supporte un tambour 240 entrainé en rotation autour de l'axe XX' par un moteur (non représenté). Le tambour 240 comprend deux jantes 241 et 242 (voir médaillon 6a de la figure 6) mobiles en translation l'une vers l'autre selon la direction de l'axe XX', et destinées à recevoir les bourrelets b₁ et b₂ de l'ébauche E de pneumatique, comme cela est représenté à la figure 6.

Comme dans le cas du premier mode de réalisation de l'invention, les jantes 241 et 242 peuvent également être du type formant une liaison étanche avec les bourrelets b₁ et b₂ ou du type standard. Des moyens permettent également d'introduire de l'air sous pression dans l'espace intérieur formé par l'ébauche de pneumatique ou par la membrane de conformation.

La figure 6 représente le dispositif selon cette seconde forme de réalisation lorsque l'ébauche de pneumatique vient d'être conformée.

Le mode opératoire de mise en oeuvre du dispositif selon cette deuxième forme de réalisation de l'invention est similaire à celui qui a été exposé précédemment.

Il en diffère toutefois en ce que, lors de la conformation, la surface de base de l'ébauche vient en contact avec les rouleaux 210 et 211 d'une part et avec la bande 230 d'autre part.

La longueur de la boucle formée par la bande entre les deux rouleaux 210 et 211 permet de maitriser la circonférence de bridage de l'ébauche de pneumatique à la circonférence de base désirée. La bande agit ainsi de manière similaire à la multiplicité de rouleaux décrits précédemment, en privant l'ébauche de la possibilité d'adopter son profil naturel.

L'introduction et l'extraction de l'ébauche de pneumatique se fait en écartant ou en rapprochant les rouleaux le long du rail 206, en veillant à conserver un écartement minimum entre lesdits rouleaux pour dégager un espace suffisant permettant d'introduire les composants entre la bande et la surface radialement externe de l'ébauche conformée.

L'introduction des composants constituant la ceinture de sommet par la fenêtre d'introduction F est illustrée aux figures 8 et 9.

Pour les mêmes raisons que celles exposées précédemment, en faisant varier la position du rouleau 214, on peut modifier à volonté la circonférence de la bande entourant l'ébauche conformée lors de l'introduction de chacun de profilés de manière à conserver à une valeur constante la circonférence de base de la surface de base de l'ébauche E. Au cours de cette opération on peut également modifier la position radiale des rouleaux 210 et 211 de manière à maintenir le centre de la circonférence formée par la bande circulant autour de l'ébauche conformée sur l'axe XX'.

A la figure 9, on a représenté le principe d'une pose par enroulement hélicoïdal d'un composant de grande longueur sur un grand nombre de tours de l'ébauche. Ce principe peut par exemple s'appliquer pour la pose d'un câble ou d'une bandelette de renfort circonférentiel ou pour la pose d'une bandelette de caoutchouc destinée à constituer la bande de roulement du pneumatique.

Les deux formes préférentielles de réalisation de l'invention décrites ci-dessus ne représentent en aucune manière une limitation de l'invention.

A titre indicatif on pourra par exemple aussi utiliser, au lieu d'une bande fermée 230, une bande ouverte circulant dans des sens alternatifs entre deux moyens d'enroulement.

Pour assurer une meilleure rigidité au dispositif, on pourra également supporter les rouleaux à chacune de leurs extrémités, pour autant que les dispositions soient prises pour permettre l'introduction et l'extraction de l'ébauche de pneumatique.

## Revendications

1. Dispositif d'assemblage destiné à la fabrication d'une ébauche de pneumatique, ledit dispositif d'assemblage comprenant des moyens de maintien (110, 111, 120, 210, 211, 230), lesdits moyens de maintien étant aptes à contenir une carcasse de pneumatique conformée (E) par une surface radialement externe du sommet de ladite carcasse, ladite carcasse étant contenue selon une circonférence donnée et mise en rotation autour d'un axe de rotation XX', **caractérisé en ce que** lesdits moyens de maintien comprennent une fenêtre d'introduction (F) permettant de faire passer des composants linéaires entre la surface radialement externe dudit sommet et une partie radialement interne desdits moyens de maintien.

2. Dispositif d'assemblage selon la revendication 1, comprenant en outre :
- un bâti (150, 250) supportant un tambour d'assemblage (140, 240), ledit tambour comprenant des jantes (141, 142, 241, 242) coaxiales avec l'axe de rotation XX' et adaptées pour recevoir les bourrelets (b₁, b₂) de l'ébauche de pneumatique,
- des moyens de conformation de l'ébauche de pneumatique,
- des moyens de mise en rotation du tambour d'assemblage (140, 240) autour de l'axe XX'.

3. Dispositif d'assemblage selon la revendication 1 ou 2, dans lequel les moyens de maintien (110, 111, 120) sont formés par une pluralité de rouleaux dont l'axe de rotation est orienté dans la direction de l'axe XX', lesdits rouleaux étant mobiles radialement par rapport à l'axe XX' et arrangés de manière à former un espace intérieur circulaire de circonférence donnée.

4. Dispositif d'assemblage selon la revendication 3, dans lequel lesdits rouleaux (110, 111, 120) sont montés à rotation par une seule de leur extrémité axiale sur une platine (100).

5. Dispositif d'assemblage selon l'une des revendications 3 ou 4, dans lequel les rouleaux (120_{b}) ont un profil méridien concave adapté au profil du sommet de l'ébauche de pneumatique à réaliser.

6. Dispositif selon l'une des revendications 3 à 5, dans lequel la fenêtre d'introduction F est définie par l'espace entre deux rouleaux (110, 111).

7. Dispositif d'assemblage selon l'une des revendications 3 à 6 dans lequel au moins un des rouleaux (110, 11, 120) est motorisé.

8. Dispositif d'assemblage selon la revendication 1 ou 2, dans lequel les moyens de maintien sont formés par une bande (230), maintenue par deux rouleaux (210, 211) orientés dans la direction de l'axe XX', et entre lesquels ladite bande (230) est apte à circuler autour de la circonférence du sommet de l'ébauche conformée (E) de pneumatique mise en rotation autour dudit axe XX'.

9. Dispositif d'assemblage selon la revendication 8, dans lequel l'espacement entre les deux rouleaux (210, 211) définit la fenêtre F d'introduction.

10. Dispositif selon l'une des revendications 8 ou 9, dans lequel la position des rouleaux est ajustable dans deux directions perpendiculaires à l'axe XX' et de préférence perpendiculaires entre elles.

11. Dispositif d'assemblage selon la revendication 10, dans lequel lesdits rouleaux (210, 211) sont montés à rotation par une seule de leur extrémité axiale sur une platine (200).

12. Dispositif d'assemblage selon l'une des revendications 10 ou 11, dans lequel au moins un des rouleaux (210, 211) est motorisé.

13. Dispositif d'assemblage selon l'une des revendications 8 à 12, dans lequel la bande continue (230) circule autour de rouleaux (212, 213, 214, 215, 216, 217, 218) disposés à l'extérieur de l'espace occupé par la bande continue lorsque ladite bande est en contact avec la surface externe de l'ébauche de pneumatique de manière à former une boucle fermée.

14. Dispositif selon d'assemblage selon l'une des revendications 8 à 13 comprenant un moyen (214, 208) apte à modifier la longueur et la tension de la partie de la bande (230) circulant entre les deux rouleaux (210, 211) et destinée à contenir l'ébauche de pneumatique par son sommet.

15. Procédé d'assemblage d'une ébauche de pneumatique comprenant des étapes au cours desquelles :
- on réalise l'ébauche d'une carcasse de pneumatique,
- à l'aide d'un dispositif selon l'une des revendications 1 à 14 dont on a préalablement ajusté la circonférence radialement interne à une valeur initiale prédéterminée, on conforme ladite carcasse pour lui conférer une forme sensiblement toroïdale, de sorte qu'une surface de base de l'ébauche conformée E destinée à recevoir la ceinture de sommet est contenue à une circonférence initiale donnée par lesdits moyens de maintien,
- on met en rotation l'ébauche autour de son axe XX', et on dépose sur la surface radialement externe de l'ébauche les composants linéaires formant la ceinture de sommet du pneumatique en les faisant passer par ladite fenêtre d'introduction F.

16. Procédé selon la revendication 15, dans lequel on modifie la circonférence radialement interne des moyens de maintien après la pose de chacun des composants, de manière à maintenir ladite surface de base de l'ébauche à la circonférence initiale.

## Patentansprüche

1. Montagevorrichtung, welche zur Herstellung eines Reifenrohlings bestimmt ist, wobei die Montagevorrichtung Haltemittel (110, 111, 120, 210, 211, 230) umfasst, wobei die Haltemittel geeignet sind, eine geformte Reifenkarkasse (E) entlang einer radial äußeren Fläche des Scheitels der Karkasse zu begrenzen, wobei die Karkasse entlang eines gegebenen Umfangs begrenzt wird und in Rotation um eine Drehachse XX' versetzt wird, **dadurch gekennzeichnet, dass** die Haltemittel ein Einführfenster (F) umfassen, welches ermöglicht, lineare Komponenten zwischen der radial äußeren Fläche des Scheitels und einem radial inneren Teil der Haltemittel durchlaufen zu lassen.

2. Montagevorrichtung nach Anspruch 1, welche außerdem umfasst:
- ein Gestell (150, 250), das eine Montagetrommel (140, 240) trägt, wobei die Trommel Felgen (141, 142, 241, 242) umfasst, die mit der Drehachse XX' koaxial sind und dafür eingerichtet sind, die Wülste (b₁, b₂) des Reifenrohlings aufzunehmen,
- Mittel zum Formen des Reifenrohlings,
- Mittel zum Versetzen der Montagetrommel (140, 240) in Rotation um die Achse XX'.

3. Montagevorrichtung nach Anspruch 1 oder 2, wobei die Haltemittel (110, 111, 120) von einer Vielzahl von Walzen gebildet werden, deren Drehachse in der Richtung der Achse XX' ausgerichtet ist, wobei die Walzen bezüglich der Achse XX' radial beweglich sind und derart angeordnet sind, dass sie einen kreisförmigen inneren Raum mit gegebenem Umfang bilden.

4. Montagevorrichtung nach Anspruch 3, wobei die Walzen (110, 111, 120) an nur einem ihrer axialen Enden an einer Platte (100) drehbar gelagert sind.

5. Montagevorrichtung nach einem der Ansprüche 3 oder 4, wobei die Walzen (120_{b}) ein konkaves Meridianprofil aufweisen, das an das Profil des Scheitels des herzustellenden Reifenrohlings angepasst ist.

6. Vorrichtung nach einem der Ansprüche 3 bis 5, wobei das Einführfenster F durch den Zwischenraum zwischen zwei Walzen (110, 111) definiert ist.

7. Montagevorrichtung nach einem der Ansprüche 3 bis 6, wobei wenigstens eine der Walzen (110, 11, 120) motorisch angetrieben ist.

8. Montagevorrichtung nach Anspruch 1 oder 2, wobei die Haltemittel von einem Band (230) gebildet werden, das von zwei Walzen (210, 211) gehalten wird, die in der Richtung der Achse XX' ausgerichtet sind und zwischen denen das Band (230) um den Umfang des Scheitels des geformten Reifenrohlings (E) herum, welcher in Drehung um die Achse XX' versetzt wird, in der Lage ist umzulaufen.

9. Montagevorrichtung nach Anspruch 8, wobei der Zwischenraum zwischen den zwei Walzen (210, 211) das Einführfenster F definiert.

10. Vorrichtung nach einem der Ansprüche 8 oder 9, wobei die Position der Walzen in zwei Richtungen verstellbar ist, die zu der Achse XX' senkrecht und vorzugsweise zueinander senkrecht sind.

11. Montagevorrichtung nach Anspruch 10, wobei die Walzen (210, 211) an nur einem ihrer axialen Enden an einer Platte (200) drehbar gelagert sind.

12. Montagevorrichtung nach einem der Ansprüche 10 oder 11, wobei wenigstens eine der Walzen (210, 211) motorisch angetrieben ist.

13. Montagevorrichtung nach einem der Ansprüche 8 bis 12, wobei das endlose Band (230) um Walzen (212, 213, 214, 215, 216, 217, 218) umläuft, die außerhalb des von dem endlosen Band eingenommenen Raumes angeordnet sind, wenn sich das Band in Kontakt mit der Außenfläche des Reifenrohlings befindet, so dass es eine geschlossene Schleife bildet.

14. Vorrichtung nach Montage nach einem der Ansprüche 8 bis 13, welche ein Mittel (214, 208) umfasst, das geeignet ist, die Länge und die Spannung des Teils des Bandes (230) zu ändern, der zwischen den zwei Walzen (210, 211) umläuft und dazu bestimmt ist, den Reifenrohling an seinem Scheitel zu begrenzen.

15. Verfahren zur Montage eines Reifenrohlings, welches Schritte umfasst, in welchen:
- der Rohling einer Reifenkarkasse hergestellt wird,
- mithilfe einer Vorrichtung nach einem der Ansprüche 1 bis 14, deren radial innerer Umfang zuvor auf einen vorbestimmten Anfangswert eingestellt wurde, die Karkasse geformt wird, um ihr eine im Wesentlichen torusförmige Gestalt zu verleihen, derart, dass eine Grundfläche des geformten Rohlings E, die dazu bestimmt ist, den Scheitelgürtel aufzunehmen, an einem anfänglichen Umfang begrenzt wird, der durch die Haltemittel gegeben ist,
- der Rohling in Rotation um seine Achse XX' versetzt wird und auf der radial äußeren Fläche des Rohlings die linearen Komponenten aufgebracht werden, die den Scheitelgürtel des Reifens bilden, indem sie durch das Einführfenster F durchlaufen gelassen werden.

16. Verfahren nach Anspruch 15, wobei der radial innere Umfang der Haltemittel nach der Anbringung jeder der Komponenten geändert wird, derart, dass für die Grundfläche des Rohlings der anfängliche Umfang beibehalten wird.

## Claims

1. Assembly device intended for manufacturing a green tyre, said assembly device comprising holding means (110, 111, 120, 210, 211, 230), said holding means being able to contain a shaped tyre carcass (E) by way of a radially external surface of the crown of said carcass, said carcass being contained along a given circumference and set in rotation about an axis of rotation XX', **characterized in that** said holding means comprises an introduction window (F) for passing linear components between the radially external surface of said crown and a radially internal part of said holding means.

2. Assembly device according to Claim 1, also comprising:
- a frame (150, 250) supporting an assembly drum (140, 240), said drum comprising rims (141, 142, 241, 242) that are coaxial with the axis of rotation XX' and designed to receive the beads (b₁, b₂) of the green tyre,
- means for shaping the green tyre,
- means for setting the assembly drum (140, 240) in rotation about the axis XX'.

3. Assembly device according to Claim 1 or 2, wherein the holding means (110, 111, 120) is formed by a plurality of rollers, the axis of rotation of which is oriented in the direction of the axis XX', said rollers being movable radially with respect to the axis XX' and arranged so as to form a circular interior space of given circumference.

4. Assembly device according to Claim 3, wherein said rollers (110, 111, 120) are mounted in rotation on a mounting plate (100) by only one of their axial ends.

5. Assembly device according to either of Claims 3 and 4, wherein the rollers (120_{b}) have a concave meridian profile adapted to the profile of the crown of the green tyre to be produced.

6. Device according to one of Claims 3 to 5, wherein the introduction window F is defined by the space between two rollers (110, 111).

7. Assembly device according to one of Claims 3 to 6, wherein at least one of the rollers (110, 11, 120) is motor-driven.

8. Assembly device according to Claim 1 or 2, wherein the holding means is formed by a belt (230) that is held by two rollers (210, 211) which are oriented in the direction of the axis XX' and between which said belt (230) is able to circulate about the circumference of the crown of the shaped green tyre (E) set in rotation about said axis XX'.

9. Assembly device according to Claim 8, wherein the space between the two rollers (210, 211) defines the introduction window F.

10. Device according to either of Claims 8 and 9, wherein the position of the rollers is variable in two directions that are perpendicular to the axis XX' and preferably mutually perpendicular.

11. Assembly device according to Claim 10, wherein said rollers (210, 211) are mounted in rotation on a mounting plate (200) by only one of their axial ends.

12. Assembly device according to either of Claims 10 and 11, wherein at least one of the rollers (210, 211) is motor-driven.

13. Assembly device according to one of Claims 8 to 12, wherein the endless belt (230) circulates about rollers (212, 213, 214, 215, 216, 217, 218) that are disposed outside the space occupied by the endless belt when said belt is in contact with the external surface of the green tyre so as to form a closed loop.

14. Assembly device according to one of Claims 8 to 13, comprising a means (214, 208) that is able to modify the length and the tension of that part of the belt (230) that circulates between the two rollers (210, 211) and that is intended to contain the green tyre by the crown thereof.

15. Method for assembling a green tyre, comprising steps in which:
- the green form of a tyre carcass is produced,
- with the aid of a device according to one of Claims 1 to 14, the radially internal circumference of which has previously been adjusted to a predetermined initial value, said carcass is shaped in order to be given a substantially toroidal shape, such that a base surface of the shaped green form E intended to receive the crown belt is contained in a given initial circumference by said holding means,
- the green form is set in rotation about its axis XX', and the linear components that form the crown belt of the tyre are placed on the radially external surface of the green form by passing them through said introduction window F.

16. Method according to Claim 15, wherein the radially internal circumference of the holding means is modified after each of the components has been positioned, so as to keep said base surface of the green form at the initial circumference.
